# EUROPÄISCHE PATENTSCHRIFT

(11) **EP 4 008 290 B1**
(45) Veröffentlichungstag und Bekanntmachung des Hinweises auf die Patenterteilung: **19.04.2023**
(21) Anmeldenummer: 21206150.1
(22) Anmeldetag: 03.11.2021
(51) Int. Cl.: A61C 7/20, A61C 7/28

(54) **VERFAHREN ZUM PROGRAMMIEREN EINES KIEFERORTHOPÄDISCHEN BAUTEILS AUS EINEM FORMGEDÄCHTNISMATERIAL**
METHOD OF PROGRAMMING AN ORTHODONTIC COMPONENT FROM A SHAPE MEMORY MATERIAL
PROCÉDÉ DE PROGRAMMATION D'UN COMPOSANT D'ORTHOPÉDIE MAXILLAIRE À PARTIR D'UNE MATIÈRE À MÉMOIRE DE FORME

(30) Priorität: 19.11.2020 DE 102020214587
(43) Veröffentlichungstag der Anmeldung: 08.06.2022
(73) Patentinhaber: DW Lingual Systems GmH, 49152 Essen (DE)
(72) Erfinder: WIECHMANN, Dirk, 49152 Bad Essen (DE)
(74) Vertreter: Taruttis, Stefan Georg

(56) Entgegenhaltungen:
- US-A1- 2014 154 637
- US-A1- 2014 234 794
- US-A1- 2018 206 941
- US-A1- 2020 315 747

## Beschreibung

Die Erfindung betrifft ein Verfahren zum Programmieren eines kieferorthopädischen Bauteils aus einem Formgedächtnismaterial.

Die kieferorthopädische Behandlung von Patienten mit einer herausnehmbaren Apparatur ist vorteilhaft bei geringgradig ausgeprägten Fehlstellungen, während schwierigere Behandlungen häufig den Einsatz festsitzender Apparaturen erfordern. Herausnehmbare Apparaturen bestehen in der Regel aus einer individuell laborgefertigten Kunststoffbasis mit Klammern und Korrekturelementen aus Edelstahldraht, die zum Teil auch mit kieferorthopädischen Schrauben versehen sind. Mit diesen Spangen lassen sich u. a. die Stellung schief stehender Zähne, die Breite der Zahnbögen und die Lage falsch positionierter Kiefer korrigieren.

Kieferorthopädische Bauteile von herausnehmbaren Apparaturen können auch eine Feder, ein Drahtabschnitt als Labialbogen oder eine Protrusionsfeder, ein Halteelement oder ein U-Bügel sein. Diese Elemente können aus Stahl, insbesondere Edelstahl, bestehen. Alternativ können diese Elemente jedoch auch aus einem Formgedächtnismaterial bestehen.

Bei einer kieferorthopädischen Behandlung eines Patienten mit festsitzenden Klammern werden zu Beginn der Behandlung häufig kieferorthopädische Drähte aus einem Formgedächtnismaterial in die Brackets eingesetzt, um eine "grobe" Ausrichtung der Zähne zu erreichen. Erst gegen Ende der kieferorthopädischen Behandlung werden bspw. Stahldrähte verwendet, um die Zähne möglichst genau in eine definierte Position zu bewegen. Für die kieferorthopädische Behandlung eines Patienten ist es notwendig, die kieferorthopädischen Bauteile aus einer Ausgangsform, in der sie dem Kieferorthopäden oder einem zahntechnischen Labor bereitgestellt werden, in eine gewünschte Zielform zu überführen, damit von diesen eine definierte bzw. gewünschte Kraft auf einen Zahn oder auch mehrere Zähne ausgeübt wird, um diesen bzw. diese in eine bestimmte Richtung zu bewegen.

Es ist bekannt, kieferorthopädische Bauteile, bspw. U-Bügel oder Labialbogen für eine herausnehmbare Apparatur, aus Stahl mit Hilfe von Zangen in eine gewünschte Zielgeometrie zu überführen, um eine gewünschte Kraft auf einen oder mehrere Zähne auszuüben.

Dies funktioniert bei kieferorthopädischen Drähten aus einem Formgedächtnismaterial nicht, da sie kein herkömmliches Elastizitätsverhalten bei Verformung aufweisen. Es gibt Verfahren, bei denen Biegeroboter verwendet werden, um sie in eine gewünschte Zielform zu biegen. Der Biegeroboter erhält die notwendigen Daten zum Biegen des kieferorthopädischen Drahtes von einer Planungssoftware eines Kieferorthopäden, in der die Zähne eines Patienten mit zugehörigen Brackets virtuell vorhanden sind und für einen bestimmten Behandlungsschritt der Verlauf des kieferorthopädischen Bogens automatisch berechnet und anschließend an den Biegeroboter exportiert wird.

Zu den wichtigsten Formgedächtnismaterialien zählen Cu-Zn-X (X: Si, Sn, Al)- Legierungen und die intermetallische NiTi-Legierung (Nickelgehalt von ca. 55 gew.%), wobei die NiTi-Legierung aufgrund günstigerer Eigenschaften eine größere technologische Bedeutung erlangen konnte.

Der Formgedächtnis-Effekt beruht auf einer thermoelastischen Martensitumwandlung, einer reversiblen, durch Scherung der Gitterebenen bedingten Phasenumwandlung. Die Abkühlung der Hochtemperatur-Phase, genannt Austenit, unter die legierungsspezifische Martensitstarttemperatur führt zu der Phasenumwandlung ohne Gestaltänderung und ohne irreversible plastische Verformung, wie es bei Stählen der Fall ist.

Formgedächtnislegierungen lassen sich im martensitischen Zustand leicht verformen; die reversible Verformung kann bis zu 8% bei NiTi betragen. Diese Verformung ist bleibend, solange sich die Legierung im martensitischen Zustand befindet. Die Erwärmung oberhalb der legierungsspezifischen Austenitstarttemperatur führt dann zur Rückstellung der ursprünglichen Gestalt.

Um ein kieferorthopädisches Bauteil aus einem Formgedächtnismaterial in eine Zielgeometrie zu programmieren, wird dieses in einer speziellen Backform in die gewünschte Zielgeometrie gebracht und dann auf eine für das Formgedächtnismaterial spezifische Sprungtemperatur erhitzt. Anschließend wird das kieferorthopädische Bauteil wieder abgekühlt und in eine kieferorthopädische Apparatur eines Patienten unter Verformung eingesetzt. In dem Mund des Patienten wird das kieferorthopädische Bauteil wieder erwärmt und erinnert sich an seine Zielgeometrie, in die es sich dann zurückverformen will. Während dieser Verformung übt das kieferorthopädische Bauteil eine Kraft auf Brackets bzw. Zähne aus, um diese in eine bestimmte Richtung zu bewegen.

Die für die Programmierung eines kieferorthopädischen Bauteils zu verwendenden Parameter, wie bspw. Sprungtemperatur, Dauer des Programmierverfahrens etc., sind von dem Formgedächtnismaterial abhängig und werden von dem Hersteller des Formgedächtnismaterials bzw. dem Hersteller des kieferorthopädischen Bauteils festgelegt und dem Anwender, bspw. dem Kieferorthopäden oder dem zahntechnischen Labor, auf Anfrage mitgeteilt.

Wird ein kieferorthopädisches Bauteil aus einem Formgedächtnismaterial aus einer Ausgangsform in eine Zielform gebogen (und ggfls. so programmiert) und kommt es dabei zu einer starken Biegung des kieferorthopädischen Bauteils beim Übergang von der Ausgangsform in die Zielform (über einen maximalen Biegewinkel hinaus), so kommt es dazu, dass das Formgedächtnismaterial im Bereich der starken Biegung plastisch verformt wird und/oder in diesem Abschnitt brüchig wird. Beides führt dazu, dass sich das Materialverhalten in dem Abschnitt in ungünstiger Weise ändert und das kieferorthopädische Bauteil nicht mehr die gewünschte Kraft in der kieferorthopädischen Apparatur ausübt.

Die maximalen Biegewinkel hängen von verschiedenen Parametern des kieferorthopädischen Bauteils ab: Zum einen dessen geometrische Form und zum anderen von dem Formgedächtnismaterial, aus dem das kieferorthopädische Bauteil besteht. Die maximalen Biegewinkel hängen aber auch von der Biegerichtung ab, um die das kieferorthopädische Bauteil, bspw. der kieferorthopädische Draht, gebogen werden soll. Weist das kieferorthopädische Bauteil bspw. einen rechteckigen Querschnitt auf, so ist es ein Unterschied, ob das kieferorthopädische Bauteil um die schmale bzw. dünne oder die breite bzw. dicke Seite des Rechtecks gebogen werden soll.

Unter dem Begriff starke Biegung ist im Rahmen der vorliegenden Anmeldung eine Biegung des kieferorthopädischen Bauteils zu verstehen, die über eine elastische Verformung hinaus geht. Mit anderen Worten wird das kieferorthopädische Bauteil aus einem Formgedächtnismaterial in einem Maße gebogen, dass es zu einer plastischen Verformung im Bereich der starken Biegung kommt und/oder das Material im Bereich der starken Biegung brüchig wird.

Die US 2014/0234794 A1 offenbart ein Verfahren zum Verformen eines kieferorthopädischen Drahtes aus einem Formgedächtnismaterial in eine Zielgeometrie zum passenden Einsetzen in eine patientenspezifische Apparatur, insbesondere in festsitzende Brackets, die auf den Zähnen eines Patienten angeordnet sind. Dabei wird zunächst ein patientenspezifisches Ziel-Set-Up des betreffenden Ober- oder Unterkiefers des Patienten erstellt. Anschließend werden Brackets auf den zu behandelnden Zähnen im Ziel-Set-Up angeordnet. Aus der Draufsicht auf das jeweilige Ziel-Set-Up wird eine zweidimensionale Abbildung erstellt, bspw. ein Foto in der Draufsicht des Ziel-Set-Ups erstellt. Diese zweidimensionale Abbildung wird in eine Datenverarbeitungsanlage geladen und es wird für jedes Bracket die Lage des Slots identifiziert. Die so gewonnen Daten zur Lage der Slots werden aus der Datenverarbeitungsanlage exportiert, um eine Backform für einen kieferorthopädischen Draht aus einem Formgedächtnismaterial zu erstellen, bspw. aus einer Aluplatte zu fräsen. Dabei werden mit Hilfe der exportierten Daten Drahtfixierabschnitte in der Backform generiert, die den Draht in den zu den Slots korrespondierenden Bereichen während des Backens halten. In die Backform wird anschließend der zu programmierende kieferorthopädische Draht eingesetzt und gebacken, um ihn in der Zielgeometrie zu programmieren. Der kieferorthopädische Draht wird somit aus seiner Ausgangsgeometrie in die Zielgeometrie in einem einzigen Verfahrensschritt programmiert, d.h. unmittelbar und direkt in seine Zielgeometrie programmiert. Dementsprechend sind die für den jeweiligen Draht, abhängig von Durchmesser des Drahts sowie dem Grad der Verformung/Biegung, geltenden physikalischen Grenzen bei der Programmierung in die Zielgeometrie zu beachten und bilden die Grenzen für die Programmierung des Drahts.

Aus der US 2018/0206941A1 ist ebenfalls ein Verfahren zum Programmieren eines kieferorthopädischen Nitinoldrahtes bekannt, bei dem in einer Basisplatte Bohrungen vorgesehen sind, die entlang einer (Kiefer-)Bogenform angeordnet sind; in die Bohrungen können Stifte mit einem Innengewinde gesetzt werden, wobei eine Schraube in das Innengewinde geschraubt werden kann, um einen kieferorthopädischen Draht zwischen Schraube und Stift einzuklemmen; ein zu programmierender Nitinoldraht wird jeweils an den Stiften entlang der Bogenform in eine gewünschte Position gebracht und zwischen der jeweiligen Schraube und dem jeweiligen Stift eingeklemmt, wodurch der Draht die gewünschte Zielgeometrie auf der Basisplatte einnimmt; Befindet sich der Draht in seiner gewünschten Zielgeometrie, wird die Basisplatte mit dem Draht in einen Ofen verbracht und dort gebacken, um den Draht in seiner Zielgeometrie zu programmieren. Auch bei diesem Verfahren wird der kieferorthopädische Draht aus einer in der Regel linearen Ausgangsgeometrie direkt und in einem Schritt in die gewünschte Zielgeometrie verformt bzw. programmiert.

Aus der US2014/0154637A1 ist ein Verfahren zur Herstellung eines kieferorthopädischen Bogendrahtes bekannt, wobei das Verfahren das Ausführen der folgenden Schritte auf einem Computer umfasst: das Bereitstellen einer ersten Bogendrahtform, die bestimmten Positionen der Zähne eines Patienten zugeordnet ist; das Definieren eines zulässigen Bereichs für einen Störungsparameter in Bezug auf die Bogendrahtform, der ein ausreichendes Gleiten des Bogendrahtes innerhalb eines Bogendrahtschlitzes mit einer vorbestimmten Abmessung bereitstellt, wobei der Störungsparameter auf einer Abweichung der Bogenlänge basiert; das Ermitteln, dass die erste Bogendrahtform einen Störungsparameter aufweist, der sich außerhalb des zulässigen Bereichs erstreckt; und das Ändern mindestens eines Abschnitts der ersten Bogendrahtform, deren Störungsparameter sich außerhalb des zulässigen Bereichs erstreckt, in eine Bogendrahtform, wodurch sich der Störungsparameter nicht mehr außerhalb des zulässigen Bereichs erstreckt, indem die Bogenlänge der ersten Bogendrahtform durch isometrisches Skalieren der ersten Bogendrahtform angepasst wird, um die Abweichung der Bogenlänge zu reduzieren. Anschließend wird ein realer kieferorthopädischer Draht in die gewünschte Zielgeometrie gebogen, bspw. durch einen Biegeroboter oder von Hand, und in der Zielgeometrie gehalten. In der Zielgeometrie erfolgt eine Wärmebehandlung, bspw. durch Strom oder Wärme in einem Ofen, um den Draht in die Zielgeometrie zu programmieren.

Die EP 3370638 B1 geht aus von einer Behandlung einer kieferorthopädischen Fehlstellung mittels Aligner: Zwischen einer IST-Stellung der Zähne eines Kiefers und einer zugehörigen SOLL-Stellung der Zähne im jeweiligen Kiefer werden mehrere Zwischenstellungen berechnet. Anschließend wird für jede Zwischenstellung eine Behandlungsschiene erstellt und der Patient trägt in aufsteigender Reihenfolge die für jede Zwischenstellung erstellte Behandlungsschiene, um die Zähne aus der IST-Stellung durch die jeweiligen Zwischenstellungen hindurch in die SOLL-Stellung zu bewegen. Mit der EP 2270638 B1, zu deren Patentfamilie die US2020/0315747A1 gehört, sollen die bisher mehreren Behandlungsschienen durch eine einzige Behandlungsschiene ersetzt werden. Zu diesem Zweck wird die erfindungsgemäß eine Behandlungsschiene aus einem Formgedächtnispolymer bei verschiedenen Temperaturen unter zur Hilfenahme bspw. ionisierender Strahlung auf verschiedenen Zwischenmodellen entsprechend den Zwischenstellungen programmiert. Anschließend trägt der Patient die eine Behandlungsschiene und erhitzt diese - am Ende eines jeden Behandlungsschritts entsprechend den jeweiligen Zwischenstellungen - auf immer höhere Temperaturen, wodurch immer mehr kristalline Strukturen der einen Behandlungsschiene zerstört werden und die Behandlungsschiene für den dann folgenden nächsten Behandlungsschritt, entsprechend der nächsten Zwischenstellung, programmiert ist.

Die Programmierung der einen Behandlungsschiene der EP 3370638 B1 beginnt somit mit der Programmierung in der Ziel-Stellung und endet mit der IST-Stellung, d.h. in umgekehrter Reihenfolge zur Behandlung. Diese umgekehrte Reihenfolge der Programmierung ist möglich, da es bei der Programmierung keine zu beachtenden Grenzen des Formgedächtnispolymers gibt.

Im Gegensatz nämlich zu der US 2014/0234794 A1, die die physikalischen Grenzen des kieferorthopädischen Drahtes bei der Verformung in die Zielgeometrie zu beachten hat, ist es in der EP 3370638 B1 möglich, die Behandlungsschiene direkt in der Zielgeometrie zu programmieren, da das Formgedächtnispolymer keine physikalischen Grenzen kennt, da die kristalline Struktur der Behandlungsschiene beliebig programmiert bzw. zerstört werden kann.

Die in der EP 3370638 B1 beschriebenen Verfahren zur Programmierung von Formgedächtnispolymeren sind auch nicht auf Formgedächtnismaterialien aus Metall übertragbar: Zum einen sind die Verfahren an sich ungeeignet, bspw. ionisierende Strahlung. Zum anderen werden in dem oben beschriebenen Verfahren nach und nach kristalline Strukturen des Formgedächtnispolymers der Behandlungsschiene zerstört, wodurch die Behandlungsschiene an sich schrittweise zerstört wird.

Aufgabe der vorliegenden Erfindung ist es, ein Verfahren zum Verformen eines kieferorthopädischen Bauteils aus einem Formgedächtnismaterial anzugeben, bei dem auch bei starken Biegungen eine ungünstige Änderung des Materialverhaltens reduziert bzw. vermieden wird.

Die Aufgabe wird erfindungsgemäß durch ein Verfahren mit den Merkmalen des Anspruchs 1 gelöst.

Im Schritt 1a) kann als kieferorthopädisches Bauteil ein kieferorthopädischer Draht zum Einsatz in einen Slot eines Brackets, eine Feder, ein Drahtabschnitt als Labialbogen oder eine Protrusionsfeder einer herausnehmbaren Apparatur, ein Halteelement einer herausnehmbaren Apparatur oder ein U-Bügel einer herausnehmbaren Apparatur bereitgestellt werden.

In einer ersten Ausführungsform wird im Schritt 1e) eine Zwischenbackform erstellt, mit der die Schritte 1f) und 1g) ausgeführt werden.

In einer zweiten Ausführungsform wird im Schritt 1e) eine erste Zwischenbackform erstellt, mit der die Schritte 1f) und 1g) ausgeführt werden, und es wird eine zweite Zwischenbackform erstellt, mit der folgend die Schritte 1f) und 1g) ausgeführt werden.

In einer dritten Ausführungsform wird im Schritt 1e) eine erste Zwischenbackform erstellt, mit der die Schritte 1f) und 1g) ausgeführt werden, und es wird eine zweite Zwischenbackform erstellt, mit der folgend die Schritte 1f) und 1g) ausgeführt werden, und es wird eine dritte Zwischenbackform erstellt, mit der folgend die Schritte 1f) und 1g) ausgeführt werden.

Wenn eine Zwischenbackform verwendet wird, wird bevorzugt die Hälfte der starken Biegung durch die Zwischenbackform ausgeführt und die andere Hälfte der starken Biegung durch die Zielbackform. Wenn zwei Zwischenbackformen verwendet werden, wird bevorzugt mit sowohl der ersten als auch mit der zweiten Zwischenbackform jeweils ein Drittel der starken Biegung ausgeführt wird und mit der Zielbackform das dritte Drittel der starken Biegung. Wenn drei Zwischenbackformen verwendet werden, wird bevorzugt mit der ersten als auch mit der zweiten als auch mit der dritten Zwischenbackform jeweils ein Viertel der starken Biegung ausgeführt wird und mit der Zielbackform das vierte Viertel der starken Biegung ausgeführt.

Alternativ zu dem gleichmäßigen Verteilen der starken Biegung auf die verschiedenen Backformen ist es möglich, die starke Biegung in unterschiedlich große Biegungen auf die jeweiligen Backformen zu verteilen. So kann beispielsweise mit der ersten Zwischenbackform ein überwiegender oder wesentlicher Teil der starken Biegung durchgeführt werden und mit der Zielbackform nur noch ein kleiner bzw. unwesentlicher Teil der starken Biegung durchgeführt werden. Ferner kann beispielsweise mit der ersten Zwischenbackform nur ein kleiner oder unwesentlicher Teil der starken Biegung durchgeführt werden und mit der Zielbackform ein überwiegender oder wesentlicher Teil der starken Biegung durchgeführt werden.

Wird nur eine Zwischenbackform verwendet, wird mit der Zwischenbackform bevorzugt zwischen 50 und 90% der starken Biegung ausgeführt und mit der Zielbackform werden 50 bis 10% der starken Biegung durchgeführt. Werden zwei Zwischenbackformen verwendet, werden bevorzugt mit der ersten Zwischenbackform 20-70% und mit der zweiten Zwischenbackform 20-50% und mit der Zielbackform 10-40% der starken Biegung ausgeführt. Werden drei Zwischenbackformen verwendet, werden bevorzugt mit der ersten Zwischenbackform 20-70% und mit der zweiten Zwischenbackform 10-40% und mit der dritten Zwischenbackform 10-40% und mit der Zielbackform 10-40% der starken Biegung durchgeführt.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: a), b) und c) eine schematische Darstellung eines kieferorthopädischen Drahtes,
- Fig. 2: a), b) und c) eine schematische Darstellung eines kieferorthopädischen Drahtes in verschiedenen Verfahrensschritten des erfindungsgemäßen Verfahrens in einer ersten Ausführungsform,
- Fig. 3: a), b), c) und d) eine schematische Darstellung eines kieferorthopädischen Drahtes in verschiedenen Verfahrensschritten des erfindungsgemäßen Verfahrens in einer zweiten Ausführungsform und
- Fig. 4: a), b), c) und d) eine schematische Darstellung eines kieferorthopädischen Drahtes in verschiedenen Verfahrensschritten des erfindungsgemäßen Verfahrens in einer dritten Ausführungsform.

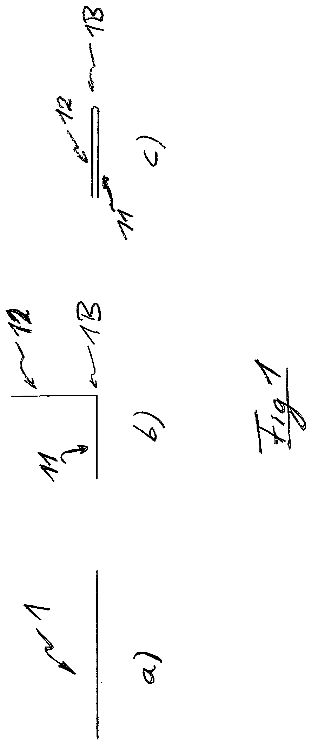

Fig. 1a) zeigt schematisch einen kieferorthopädischen Draht 1, wie er in einer kieferorthopädischen Praxis oder einem zahntechnischen Labor vorliegt. Der kieferorthopädische Draht ist in seiner Ausgangsform dargestellt: er ist linear bzw. gerade gebildet und weist eine für einen kieferorthopädischen Draht typische Länge und Querschnitt auf. Der kieferorthopädische Draht 1 ist aus einem Formgedächtnismaterial gebildet.

Der kieferorthopädische Draht ist zum Einsatz als kieferorthopädisches Bauteil in einer herausnehmbaren Apparatur bestimmt, bspw. als Labialbogen, Protrusionsfeder, Halteelement oder U-Bügel.

Ausgehend von der in Fig. 1a) gezeigten Ausgangsform sind zu diesem Zweck an dem kieferorthopädischen Draht 1 Biegungen vorzunehmen, um diesen patientenspezifisch in eine herausnehmbare Apparatur eines Patienten einzusetzen, wobei der kieferorthopädische Draht 1 zuvor auf eine bestimmte Zielform programmiert wird.

Die notwendigen Prozessparameter zum Backen des kieferorthopädischen Drahts 1 werden typischerweise von dem Hersteller und/oder Lieferanten des kieferorthopädischen Drahts 1 auf Anfrage zur Verfügung gestellt.

Um den kieferorthopädischen Draht 1 in eine Zielform zu programmieren, werden folgende Schritte ausgeführt: Erstellen einer Zielbackform für den kieferorthopädischen Draht, Einsetzen des kieferorthopädischen Drahts in die Zielbackform und Backen des kieferorthopädischen Drahts in der Zielbackform, um ihn in der Zielform zu programmieren,

Fig. 1b) zeigt eine schematische Darstellung des kieferorthopädischen Drahtes 1 der Fig. 1a), wobei der kieferorthopädische Draht 1 eine Biegung 1B zwischen einem ersten Abschnitt 11 und einem zweiten Abschnitt 12 des kieferorthopädischen Drahtes 1 aufweist. Die Biegung 1B ist als 90°-Biegung ausgeführt.

Fig. 1c) zeigt eine schematische Darstellung des kieferorthopädischen Drahtes 1 der Fig. 1a), wobei der kieferorthopädische Draht 1 eine Biegung 1B zwischen einem ersten Abschnitt 11 und einem zweiten Abschnitt 12 des kieferorthopädischen Drahtes 1 aufweist. Die Biegung 1B ist als 180°-Biegung ausgeführt.

Fig. 1b) und c) zeigen Biegungen 1B des kieferorthopädischen Drahtes von 90° bzw. 180°, die für die meisten kieferorthopädischen Drähte starke Biegungen sind.

Die kieferorthopädischen Drähte 1 der Fig. 1b) und 1c) sind in der gezeigten Form natürlich nicht für den Einsatz in eine kieferorthopädische Apparatur eines Patienten geeignet. Diese vereinfachte Darstellung eines kieferorthopädischen Drahtes 1 mit nur einer Biegung 1B ist jedoch für die Erläuterung der Prinzipien der vorliegenden Erfindung ausreichend, da natürlich mehrere Biegungen 1B und Biegungen 1B unterschiedlichen Grades in dem kieferorthopädischen Draht 1 vorgenommen werden können, um ihn in eine Zielform zu überführen, wie sie für die festsitzende Klammer eines Patienten notwendig ist.

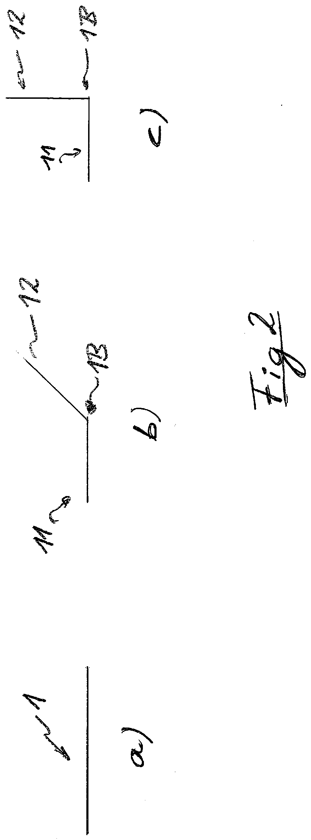

Mit Bezug auf Fig. 2 wird folgend eine erste Ausführungsform des erfindungsgemäßen Verfahrens beschrieben.

Fig. 2a) zeigt den kieferorthopädischen Draht 1 in seiner Ausgangsform, in der er vom Hersteller bereitgestellt wird. Der kieferorthopädische Draht 1 soll in eine Zielform mit einer 90°-Biegung überführt werden, um bspw. als Labialbogen in einer herausnehmbaren Apparatur Verwendung zu finden, wobei dazu natürlich weitere Biegungen notwendig wären. Bei einphasiger Programmierung des kieferorthopädischen Drahts 1 würde dieser beim direkten Überführen in die Zielform plastisch verformt. Biegeversuche des behandelnden Kieferorthopäden oder auch des zahntechnischen Labors haben experimentell ergeben, dass ab einer Biegung von 60° eine plastische Verformung im Draht 1 im Bereich der Biegung auftritt.

Der kieferorthopädische Draht 1 der Fig. 2a) wird in einem nächsten Schritt in eine nicht dargestellt Zwischenbackform eingesetzt und in dieser gebacken und folgend abgekühlt.

Das Ergebnis dieses Schritts ist in Fig. 2b) gezeigt: der kieferorthopädische Draht 1 weist zwischen einem ersten Abschnitt 11 und einem zweiten Abschnitt 12 eine Biegung 1B von 45° auf.

In einem nächsten Schritt wird der kieferorthopädische Draht 1 der Fig. 2b) in eine nicht dargestellte Zielbackform eingelegt und in dieser gebacken und folgend abgekühlt. Das Ergebnis dieses Schritts ist in Fig. 2c) gezeigt: der kieferorthopädische Draht 1 weist zwischen dem ersten Abschnitt 11 und dem zweiten Abschnitt 12 eine Biegung 1B von 90° auf.

Um die starke Biegung des kieferorthopädischen Drahtes 1 von 0° in der Ausgangsform der Fig. 2a) auf 90° in der Zielform der Fig. 2c) in einem Schritt zu vermeiden, wird der kieferorthopädische Draht 1 in einer Zwischenbackform mit einer Biegung von 45° gemäß Fig. 2b) versehen und erst aus dieser Form der Fig. 2b) in die Zielform der Fig. 2c) mit Hilfe der Zielbackform überführt. Auf diese Weise wurde die starke Biegung von 90° vermieden.

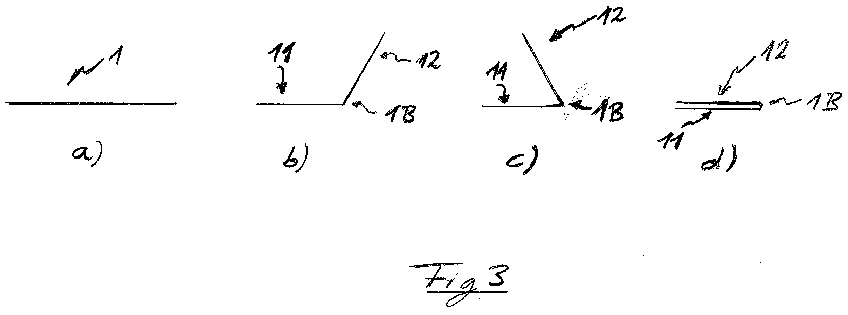

Mit Bezug auf Fig.3 wird eine zweite Ausführungsform des erfindungsgemäßen Verfahrens beschrieben.

Fig. 3a) zeigt den kieferorthopädischen Draht 1 in seiner Ausgangsform, in der er vom Hersteller bereitgestellt wird. Der kieferorthopädische Draht 1 soll in eine Zielform mit einer 180°-Biegung überführt werden, um bspw. als U-Bügel in einer herausnehmbaren Apparatur Verwendung zu finden, wobei dazu natürlich weitere Biegungen notwendig wären. Bei einphasiger Programmierung des kieferorthopädischen Drahts 1 würde dieser beim direkten Überführen in die Zielform plastisch verformt. Biegeversuche des behandelnden Kieferorthopäden oder auch des zahntechnischen Labors haben experimentell ergeben, dass ab einer Biegung von 80° eine plastische Verformung im Draht 1 im Bereich der Biegung auftritt.

Der kieferorthopädische Draht 1 der Fig. 3a) wird in einem nächsten Schritt in eine nicht dargestellt Zwischenbackform eingesetzt und in dieser gebacken und folgend abgekühlt.

Das Ergebnis dieses Schritts ist in Fig. 3b) gezeigt: der kieferorthopädische Draht 1 weist zwischen einem ersten Abschnitt 11 und einem zweiten Abschnitt 12 eine Biegung 1B von 60° auf.

In einem nächsten Schritt wird der kieferorthopädische Draht 1 der Fig. 3b) in eine weitere, nicht dargestellte Zwischenbackform eingelegt und in dieser gebacken und folgend abgekühlt. Das Ergebnis dieses Schritts ist in Fig. 3c) gezeigt: der kieferorthopädische Draht 1 weist zwischen dem ersten Abschnitt 11 und dem zweiten Abschnitt 12 eine Biegung 1B von 120° auf.

In einem nächsten Schritt wird der kieferorthopädische Draht 1 der Fig. 3c) in eine nicht dargestellte Zielbackform eingelegt und in dieser gebacken und folgend abgekühlt. Das Ergebnis dieses Schritts ist in Fig. 3d) gezeigt: der kieferorthopädische Draht 1 weist zwischen dem ersten Abschnitt 11 und dem zweiten Abschnitt 12 eine Biegung 1B von 180° auf.

Um die starke Biegung des kieferorthopädischen Drahtes 1 von 0° in der Ausgangsform der Fig. 3a) auf 180° in der Zielform der Fig. 3d) in einem Schritt zu vermeiden, wird der kieferorthopädische Draht 1 in der ersten Zwischenbackform mit einer Biegung von 60° gemäß Fig. 3b) versehen und in der zweiten Zwischenbackform mit einer Biegung von weiteren 60° gemäß Fig. 3c) auf 120° versehen und erst aus dieser Form der Fig. 3c) in die Zielform der Fig. 3d) mit Hilfe der Zielbackform überführt. In dieser Ausführungsform wird die Gesamtbiegung von 180° gleichmäßig auf drei Biegungen von jeweils 60° aufgeteilt.

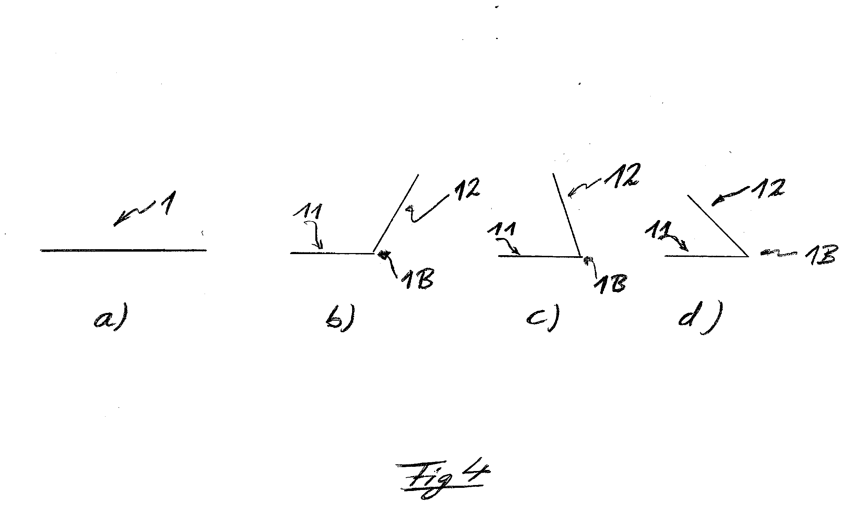

Mit Bezug auf Fig.4 wird eine dritte Ausführungsform des erfindungsgemäßen Verfahrens beschrieben.

Fig. 4a) zeigt den kieferorthopädischen Draht 1 in seiner Ausgangsform, wie er vom Hersteller bereitgestellt wird. Der kieferorthopädische Draht 1 soll in eine Zielform mit einer 135°-Biegung überführt werden, um bspw. als Halteelement in einer herausnehmbaren Apparatur Verwendung zu finden, wobei dazu natürlich weitere Biegungen notwendig wären. Bei einphasiger Programmierung des kieferorthopädischen Drahts 1 würde dieser beim direkten Überführen in die Zielform plastisch verformt. Biegeversuche des behandelnden Kieferorthopäden oder auch des zahntechnischen Labors haben experimentell ergeben, dass ab einer Biegung von 70° eine plastische Verformung im Draht 1 im Bereich der Biegung auftritt.

Der kieferorthopädische Draht 1 der Fig. 4a) wird in einem nächsten Schritt in eine nicht dargestellt Zwischenbackform eingesetzt und in dieser gebacken und folgend abgekühlt.

Das Ergebnis dieses Schritts ist in Fig. 4b) gezeigt: der kieferorthopädische Draht 1 weist zwischen einem ersten Abschnitt 11 und einem zweiten Abschnitt 12 eine Biegung 1B von 60° auf.

In einem nächsten Schritt wird der kieferorthopädische Draht 1 der Fig. 4b) in eine weitere, nicht dargestellte Zwischenbackform eingelegt und in dieser gebacken und folgend abgekühlt.

Das Ergebnis dieses Schritts ist in Fig. 4c) gezeigt: der kieferorthopädische Draht 1 weist zwischen dem ersten Abschnitt 11 und dem zweiten Abschnitt 12 eine Biegung 1B von 110° auf.

In einem nächsten Schritt wird der kieferorthopädische Draht 1 der Fig. 4c) in eine nicht dargestellte Zielbackform eingelegt und in dieser gebacken und folgend abgekühlt.

Das Ergebnis dieses Schritts ist in Fig. 4d) gezeigt: der kieferorthopädische Draht 1 weist zwischen dem ersten Abschnitt 11 und dem zweiten Abschnitt 12 eine Biegung 1B von 135° auf.

Um die starke Biegung des kieferorthopädischen Drahtes 1 von 0° in der Ausgangsform der Fig. 4a) auf 135° in der Zielform der Fig. 4d) in einem Schritt zu vermeiden, wird der kieferorthopädische Draht 1 in einer ersten Zwischenbackform mit einer Biegung von 60° gemäß Fig. 4b) versehen und in einer zweiten Zwischenbackform mit einer Biegung von weiteren 50° gemäß Fig. 4c) auf 110° versehen und erst aus dieser Form der Fig. 4c) in die Zielform der Fig. 4d) mit Hilfe der Zielbackform überführt. In dieser Ausführungsform wird die Gesamtbiegung von 135° ungleichmäßig auf drei Biegungen von 60° und dann 50° und dann 25° in den jeweiligen Backformen aufgeteilt.

### Bezugszeichenliste

- 1: kieferorthopädischer Draht
- 11: erster Abschnit des kieferorthopädischen Drahts
- 12: zweiter Abschnitt des kieferorthopädischen Drahts
- 1B: Biegung

## Patentansprüche

1. Verfahren zum Programmieren eines kieferorthopädischen Bauteils aus einem Formgedächtnismaterial ausgehend von einer Ausgangsform des kieferorthopädischen Bauteils in eine zu programmierende Zielform des kieferorthopädischen Bauteils, wobei die Zielform im Vergleich zu der Ausgangsform zumindest abschnittsweise eine starke Biegung aufweist, wobei eine starke Biegung eine Biegung des kieferorthopädischen Bauteils ist, die über eine elastische Verformung hinausgeht, wobei das Verfahren die folgende Schritte umfasst :
a. Bereitstellen eines kieferorthopädischen Bauteils (1) aus einem Formgedächtnismaterial in einer Ausgangsform,
b. Erstellen einer Zielbackform für das kieferorthopädische Bauteil (1),
c. Einsetzen des kieferorthopädischen Bauteils (1) in die Zielbackform und
d. Backen des kieferorthopädischen Bauteils (1) in der Zielbackform, um es in der Zielform zu programmieren,
**gekennzeichnet durch** folgende Schritte nach dem Schritt a)
e. Erstellen mindestens einer Zwischenbackform für das kieferorthopädische Bauteil (1), in der das kieferorthopädische Bauteil (1) eine Zwischenform zwischen der Ausgangform und der Zielform aufweist,
f. Einsetzen des kieferorthopädischen Bauteils (1) in die Zwischenbackform und
g. Backen des kieferorthopädischen Bauteils (1) in der Zwischenbackform.

2. Verfahren nach Anspruch 1, **dadurch gekennzeichnet, dass** im Schritt 1a) als kieferorthopädisches Bauteil (1) ein kieferorthopädischer Draht zum Einsatz in einen Slot eines Brackets, eine Feder, ein Drahtabschnitt als Labialbogen oder eine Protrusionsfeder einer herausnehmbaren Apparatur, ein Halteelement einer herausnehmbaren Apparatur oder ein U-Bügel einer herausnehmbaren Apparatur bereitgestellt wird.

3. Verfahren nach Anspruch 1 oder 2, **dadurch gekennzeichnet, dass** im Schritt 1e) eine Zwischenbackform erstellt wird, mit der die Schritte 1f) und 1g) ausgeführt werden.

4. Verfahren nach Anspruch 1 oder 2, **dadurch gekennzeichnet, dass** im Schritt 1e) eine erste Zwischenbackform erstellt wird, mit der die Schritte 1f) und 1g) ausgeführt werden, und eine zweite Zwischenbackform erstellt wird, mit der folgend die Schritte 1f) und 1g) ausgeführt werden.

5. Verfahren nach Anspruch 1 oder 2, **dadurch gekennzeichnet, dass** im Schritt 1e) eine erste Zwischenbackform erstellt wird, mit der die Schritte 1f) und 1g) ausgeführt werden, und eine zweite Zwischenbackform erstellt wird, mit der folgend die Schritte 1f) und 1g) ausgeführt werden, und eine dritte Zwischenbackform erstellt wird, mit der folgend die Schritte 1f) und 1g) ausgeführt werden.

6. Verfahren nach einem der Ansprüche 3, 4 oder 5, **dadurch gekennzeichnet, dass**, wenn eine Zwischenbackform verwendet wird, die Hälfte der starken Biegung durch die Zwischenbackform ausgeführt wird, und dass, wenn zwei Zwischenbackformen verwendet werden, sowohl mit der ersten als auch der zweiten Zwischenbackform jeweils ein Drittel der starken Biegung ausgeführt wird, und dass, wenn drei Zwischenbackformen verwendet werden, sowohl mit der ersten als auch mit der zweiten als auch mit der dritten Zwischenbackform jeweils ein Viertel der starken Biegung ausgeführt wird.

7. Verfahren nach einem der Ansprüche 3, 4 oder 5, **dadurch gekennzeichnet, dass**, wenn eine Zwischenbackform verwendet wird, mit der Zwischenbackform zwischen 50 und 90% der starken Biegung ausgeführt werden und mit der Zielbackform 50 bis 10% der starken Biegung, und dass, wenn zwei Zwischenbackformen verwendet werden, mit der ersten Zwischenbackform 20-70% und mit der zweiten Zwischenbackform 20-50% und mit der Zielbackform 10-40% der starken Biegung ausgeführt werden, und dass, wenn drei Zwischenbackformen verwendet werden, mit der ersten Zwischenbackform 20-70% und mit der zweiten Zwischenbackform 10-40% und mit der dritten Zwischenbackform 10-40% und mit der Zielbackform 10-40% der starken Biegung ausgeführt werden.

## Claims

1. Method of programming an orthodontic component from a shape memory material starting from an initial shape of the orthodontic component into a target shape of the orthodontic component to be programmed, the target shape having a severe bending at least in sections compared to the initial shape, a severe bending being a bending of the orthodontic component exceeding an elastic deformation, the method comprising the following steps:
a. providing an orthodontic component (1) from a shape memory material in an initial shape,
b. creating a target bake mold for the orthodontic component (1),
c. inserting the orthodontic component (1) into the target baking mold and
d. baking the orthodontic component (1) in the target baking mold to program it in the target shape,
**characterized by** the following steps after step a)
e. creating at least one intermediate bake mold for the orthodontic component (1), in which the orthodontic component (1) has an intermediate shape between the initial shape and the target shape,
f. inserting the orthodontic component (1) into the intermediate baking mold and
g. baking the orthodontic component (1) in the intermediate baking mold.

2. Method according to claim 1, **characterized in that** in step 1a), the orthodontic component (1) provided is an orthodontic wire for insertion into a slot of a bracket, a spring, a wire section as a labial arch or a protrusion spring of a removable appliance, a retaining element of a removable appliance or a U-bow of a removable appliance.

3. Method according to claim 1 or 2, **characterized in that** in step 1e) an intermediate baking mold is created with which steps 1f) and 1g) are carried out.

4. Method according to claim 1 or 2, **characterized in that** in step 1e) a first intermediate baking mold is created with which steps 1f) and 1g) are carried out, and a second intermediate baking mold is created with which steps 1f) and 1g) are subsequently carried out.

5. Method according to claim 1 or 2, **characterized in that** in step 1e) a first intermediate baking mold is created with which steps 1f) and 1g) are carried out, and a second intermediate baking mold is created with which steps 1f) and 1g) are subsequently carried out, and a third intermediate baking mold is created with which steps 1f) and 1g) are subsequently carried out.

6. A method according to one of claims 3, 4 or 5, **characterized in that**, when one intermediate baking mold is used, half of the severe bending is performed by the intermediate baking mold, and that, when two intermediate baking molds are used, one third of the severe bending is performed with each of the first and second intermediate baking molds, and that, when three intermediate baking molds are used, one quarter of the severe bending is performed with each of the first, second and third intermediate baking molds.

7. Method according to any one of claims 3, 4 or 5, **characterized in that**, when one intermediate baking mold is used, between 50 and 90% of the severe bending is performed with the intermediate baking mold and between 50 and 10% of the severe bending is performed with the target baking mold, and **in that**, when two intermediate baking molds are used, 20-70% of the severe bending is performed with the first intermediate baking mold, 20-50% of the s severe bending is performed with the second intermediate baking mold, and 10-40% of the severe bending is performed with the target baking mold, and that, when three intermediate baking molds are used, 20-70% of the severe bending is performed with the first intermediate baking mold, 10-40% of the severe bending is performed with the second intermediate baking mold, 10-40% of the severe bending is performed with the third intermediate baking mold, and 10-40% of the severe bending is performed with the target baking mold.

## Revendications

1. Procédé de programmation d'un composant orthodontique à partir d'un matériau à mémoire de forme en partant d'une forme initiale du composant orthodontique vers une forme cible à programmer du composant orthodontique, la forme cible présentant au moins par sections une forte flexion par rapport à la forme initiale, une forte flexion étant une flexion du composant orthodontique qui va au-delà d'une déformation élastique, le procédé comprenant les étapes suivantes :
a. fournir un composant orthodontique (1) à partir d'un matériau à mémoire de forme dans une forme initiale,
b. créer un moule de cuisson cible pour l'élément orthodontique (1),
c. mise en place de l'élément orthodontique (1) dans le moule de cuisson cible et
d. la cuisson de l'élément orthodontique (1) dans le moule de cuisson cible afin de le programmer dans le moule cible,
**caractérisé par** les étapes suivantes après l'étape a)
e. la réalisation d'au moins un moule de cuisson intermédiaire pour le composant orthodontique (1), dans lequel le composant orthodontique (1) présente une forme intermédiaire entre la forme initiale et la forme cible,
f. mise en place de l'élément orthodontique (1) dans le moule de cuisson intermédiaire et
g. cuisson de l'élément orthodontique (1) dans le moule de cuisson intermédiaire.

2. Procédé selon la revendication 1, **caractérisé en ce qu'**à l'étape 1a), on prépare comme composant orthodontique (1) un fil orthodontique destiné à être inséré dans une fente d'un bracket, un ressort, un tronçon de fil servant d'arc labial ou un ressort de protrusion d'un appareil amovible, un élément de retenue d'un appareil amovible ou un étrier en U d'un appareil amovible.

3. Procédé selon la revendication 1 ou 2, **caractérisé en ce que**, à l'étape 1e), un moule de cuisson intermédiaire est créé, avec lequel les étapes 1f) et 1g) sont exécutées.

4. Procédé selon la revendication 1 ou 2, **caractérisé en ce que**, à l'étape 1e), un premier moule de cuisson intermédiaire est créé, avec lequel les étapes 1f) et 1g) sont exécutées, et un deuxième moule de cuisson intermédiaire est créé, avec lequel les étapes 1f) et 1g) sont ensuite exécutées.

5. Procédé selon la revendication 1 ou 2, **caractérisé en ce que**, à l'étape 1e), un premier moule de cuisson intermédiaire est créé, avec lequel les étapes 1f) et 1g) sont exécutées, et un deuxième moule de cuisson intermédiaire est créé, avec lequel les étapes 1f) et 1g) sont ensuite exécutées, et un troisième moule de cuisson intermédiaire est créé, avec lequel les étapes 1f) et 1g) sont ensuite exécutées.

6. Procédé selon l'une quelconque des revendications 3, 4 ou 5, **caractérisé en ce que**, lorsqu'un moule de cuisson intermédiaire est utilisé, la moitié de la forte flexion est réalisée par le moule de cuisson intermédiaire, et **en ce que**, lorsque deux moules de cuisson intermédiaires sont utilisés, un tiers de la forte flexion est réalisé à la fois par le premier et le deuxième moule de cuisson intermédiaire, et **en ce que**, lorsque trois moules de cuisson intermédiaires sont utilisés, un quart de la forte flexion est réalisé à la fois par le premier et le deuxième et par le troisième moule de cuisson intermédiaire.

7. Procédé selon l'une des revendications 3, 4 ou 5, **caractérisé en ce que**, lorsqu'on utilise un moule de cuisson intermédiaire, on réalise avec le moule de cuisson intermédiaire entre 50 et 90% de la forte flexion et avec le moule de cuisson cible entre 50 et 10% de la forte flexion, et **en ce que**, lorsqu'on utilise deux moules de cuisson intermédiaires, 20-70% de la forte flexion sont réalisés avec la première forme de cuisson intermédiaire et 20-50% avec la deuxième forme de cuisson intermédiaire et 10-40% avec la forme de cuisson cible, et que, si trois formes de cuisson intermédiaires sont utilisées, 20-70% de la forte flexion sont réalisés avec la première forme de cuisson intermédiaire et 10-40% avec la deuxième forme de cuisson intermédiaire et 10-40% avec la troisième forme de cuisson intermédiaire et 10-40% avec la forme de cuisson cible.
